# EUROPEAN PATENT APPLICATION

(11) **EP 1 102 268 A2**
(43) Date of publication of application: **23.05.2001**
(21) Application number: 00124292.4
(22) Date of filing: 14.11.2000
(51) Int. Cl.: G11B 27/00, G11B 27/031, G11B 27/11

(54) **AV information processing apparatus and computer program**

(30) Priority: 15.11.1999 JP 32463899
(71) Applicant: Pioneer Corporation, Tokyo-to (JP)
(72) Inventor: Gayama, Shinichi, Tsurugashima-shi, Saitama-ken (JP); Horiuchi, Naoaki, Tsurugashima-shi, Saitama-ken (JP); Tabata, Toshio, Tsurugashima-shi, Saitama-ken (JP)
(74) Representative: Klingseisen, Franz, Dipl.-Ing.

(57) **Abstract**

An AV information processing apparatus (A) is provided with: an AV information accumulating device (14) for accumulating AV information including at least one of audio information, video information and data information corresponding to at least one of the audio information and the video information; a requesting device (7) for requesting an execution of an information process, which uses the accumulated AV information, from an external portion; an executing device (10) for executing the requested information process by using the accumulated AV information; a related information accumulating device (15) for accumulating related information, which is related to the accumulated AV information; and an outputting device (5) for searching the related information accumulating device for the related information corresponding to a non-executable process, which is not executable by the executing device, and outputting the searched related information to an external portion when the non-executable process is requested by the requesting device.

## Description

### BACKGROUND OF THE INVENTION

### 1. Field of the Invention

The present invention relates to an AV (Audio Visual) information processing apparatus for processing AV information including at least one of (i) audio information having voice information and music information, (ii) video information having dynamic picture information and static picture information and (iii) data information, such as program data, character data or the like, corresponding to at least one of the audio information and the video information (hereafter, which are merely referred to as "AV information"). More particularly, the present invention relates to an AV information processing apparatus for carrying out a process corresponding to a process request from a user.

The present invention also relates to a computer program for processing the AV information, which enables a computer to carry out such a process corresponding to the process request from the user.

### 2. Description of the Related Art

For example, in case that user's desired AV information is reproduced and displayed by the AV information processing apparatus containing a plurality of information record media, such as hard discs and the like, on which a plurality of AV information are recorded in advance, the user owns in advance "reproduction-related-information" (e.g., identification information to specify the information record medium on which a song name or the AV information desired to be viewed is recorded) with regard to the AV information that the user desires to view, and inputs this owned reproduction-related-information to the AV information processing apparatus so as to specify the AV information to be viewed. Then, the user instructs the AV information processing apparatus to start the reproduction of the specified AV information, and accordingly views the desired AV information.

On the other hand, in case that user's desired AV information is recorded onto any one of the information record media, the user owns in advance "record-related-information" (e.g., specifying information to specify the information record medium, or record position information to specify a record position on the specified information record medium) with regard to the information record medium onto which the AV information is desired to be recorded, and inputs this owned record-related-information to the AV information processing apparatus so as to specify the information record medium onto which the AV information is desired to be recorded. Then, the user instructs the AV information processing apparatus to start recording, and accordingly records the desired AV information.

However, in the above-mentioned reproduction of the AV information, if a record amount of the AV information is huge and if the number and the kind of the information record media for recording the AV information are various (for example, such as a CD (Compact Disc), a DVD, a cassette tape, a MD (Mini Disc) and the like), a procedure of searching for the AV information by using the reproduction-related-information becomes complex, which results in a problem that the user who is not accustomed to the treatment of the AV information processing apparatus has difficulty in treating it.

Moreover, even in the case of recording the AV information, if the kind and the number of information record media for recording are various, a procedure necessary for recording becomes complex, which results in the problem that the user who is not accustomed to the treatment of the AV information processing apparatus has the difficulty in treating it, similarly to the case of the reproduction.

### SUMMARY OF THE INVENTION

The present invention is proposed in view of the above mentioned problems. It is therefore an object of the present invention to provide an AV information processing apparatus, which allows a user to carry out a necessary procedure of reproducing and/or recording many kinds of AV information and a large quantity of AV information easily and quickly, in other words, which allows the user to carry out the necessary procedure in a so-called user-friendly manner, even if the user who is not accustomed to a treatment of the AV information processing apparatus carries out the necessary procedure, as well as a computer program, which enables a computer to function as the AV information processing apparatus.

The above object of the present invention can be also achieved by an AV information processing apparatus provided with: an AV information accumulating device, such as an AV information recording portion or the like, for accumulating AV information including at least one of audio information, video information and data information corresponding to at least one of the audio information and the video information; a requesting device, such as a microphone or the like, for requesting an execution of an information process, which uses the accumulated AV information, from an external portion; an executing device, such as an AV control agent or the like, for executing the requested information process by using the accumulated AV information; a related information accumulating device, such as an AV information database or the like, for accumulating related information, which is related to the accumulated AV information; and an outputting device, such as an interactive agent or the like, for searching the related information accumulating device for the related information corresponding to a non-executable process, which is not executable by the executing device, and outputting the searched related information to an external portion when the non-executable process is requested by the requesting device.

According to the AV information processing apparatus of the present invention, the information process is executed when the information process, which is executable by using the accumulated AV information, is requested. On the other hand, even if the information process, which is not executable by using the AV information, is requested, the corresponding related information is searched and outputted. Accordingly, it is possible for the user to obtain some process result when the user requests the information process to the AV information processing apparatus. Thus, even the user who is not accustomed to the treatment of the AV information processing apparatus can easily treat the AV information processing apparatus without dissatisfaction. In this way, it is possible for the AV information processing apparatus to execute the necessary information process in the user friendly manner.

In one aspect of the AV information processing apparatus of the present invention, the outputting device searches the related information accumulating device for a plurality of the related information, whose response manners to the non-executable process are different from each other, and outputs the searched plurality of the related information to the external portion.

According to this aspect, since the plurality of related information, whose response manners are different from each other, are outputted, it is possible for the AV information processing apparatus to execute the information process in the user friendly manner.

In another aspect of the AV information processing apparatus of the present invention, the outputting device outputs the searched related information corresponding to the non-executable process to the external portion by using at least one of a voice and a picture.

According to this aspect, since the related information is outputted by using the voice and/or picture, it is possible to output the related information in such a manner that the user can easily recognize it.

In another aspect of the AV information processing apparatus of the present invention, the apparatus is further provided with a sub-outputting device, such as an interactive agent or the like, for outputting information indicating a fact that no process can be executed by the AV information processing apparatus if an impossible process, which is impossible to execute even by using the related information, is requested by the requesting device.

According to this aspect, if the information process, which is not executable by the AV information processing apparatus, is requested, the fact that no process can be executed is outputted. Thus, it is possible for the user to obtain some process result when the user requests the information process to the AV information processing apparatus. In this way, it is possible for the AV information processing apparatus to execute the necessary information process in a further user friendly manner.

In another aspect of the AV information processing apparatus of the present invention, the requesting device is provided with a voice receiving device, such as a microphone or the like, for receiving a request of the information process from the external portion through a voice.

According to this aspect, it is possible for the user to easily request the information process by using the voice.

The above object of the present invention can be also achieved by a computer program of instructions executable by a computer to perform steps to execute information process requested by a user, in an AV information processing apparatus provided with: an AV information accumulating device for accumulating AV information including at least one of audio information, video information and data information corresponding to at least one of the audio information and the video information; and a related information accumulating device for accumulating related information, which is related to the accumulated AV information. The steps include: a requesting step of requesting an execution of an information process, which uses the accumulated AV information, from an external portion; an executing step of executing the requested information process by using the accumulated AV information; and an outputting step of searching the related information accumulating device for the related information corresponding to a non-executable process, which is not executable by the executing step, and outputting the searched related information to an external portion when the non-executable process is requested by the requesting step.

According to the computer program of the present invention, as the computer reads in and executes the computer program, it is possible to realize the above described AV information processing apparatus of the present invention on the computer.

In one aspect of the computer program of the present invention, the outputting step searches the related information accumulating device for a plurality of the related information, whose response manners to the non-executable process are different from each other, and outputs the searched plurality of the related information to the external portion.

According to this aspect, since the plurality of related information, whose response manners are different from each other, are outputted, it is possible for the AV information processing apparatus to execute the information process in the user friendly manner.

In another aspect of the computer program of the present invention, the outputting step outputs the searched related information corresponding to the non-executable process to the external portion by using at least one of a voice and a picture.

According to this aspect, since the related information is outputted by using the voice and/or picture, it is possible to output the related information in such a manner that the user can easily recognize it.

In another aspect of the computer program of the present invention, the steps further include a sub-outputting step of outputting information indicating a fact that no process can be executed by the AV information processing apparatus if an impossible process, which is impossible to execute even by using the related information, is requested by the requesting step.

According to this aspect, if the information process, which is not executable by the AV information processing apparatus, is requested, the fact that no process can be executed is outputted. Thus, it is possible for the user to obtain some process result when the user requests the information process to the AV information processing apparatus. In this way, it is possible for the AV information processing apparatus to execute the necessary information process in a further user friendly manner.

In another aspect of the computer program of the present invention, the requesting step is provided with a voice receiving step of receiving a request of the information process from the external portion through a voice.

According to this aspect, it is possible for the user to easily request the information process by using the voice.

The nature, utility, and further features of this invention will be more clearly apparent from the following detailed description with respect to preferred embodiments of the invention when read in conjunction with the accompanying drawings briefly described below.

### BRIEF DESCRIPTION OF THE DRAWINGS

FIG.1 is a block diagram showing a schematic configuration of an AV information processing apparatus as an embodiment of the present invention;

FIG.2 is a flowchart showing respective processes constituting an AV information process schematically in a module manner in the embodiment;

FIG.3 is a flowchart showing detailed portions of a login process in the embodiment;

FIG.4 is a flowchart showing detailed portions of an input process in the embodiment;

FIG.5 is a flowchart showing detailed portions of a request analysis process in the embodiment;

FIG.6 is a flowchart showing detailed portions of an accumulated information process in the embodiment;

FIG.7 is a flowchart showing detailed portions of a user response process in the embodiment;

FIG.8 is a flowchart showing detailed portions of an output process in the embodiment;

FIG.9 is a flowchart showing detailed portions of a reproducing process in the embodiment;

FIG.10 is a flowchart showing detailed portions of a recording process in the embodiment;

FIG.11 is a flowchart showing detailed portions of a logout process in the embodiment; and

FIG.12 is a flowchart showing detailed portions of an information download process in the embodiment.

### DETAILED DESCRIPTION OF THE PREFERRED EMBODIMENTS

Preferred embodiments of the present invention will be explained below with reference to the drawings.

In the following embodiment, the present invention is applied to an AV information processing apparatus, which can reproduce one AV information from an AV information recording portion, such as a hard disc or the like, on which the AV information is recorded, and also can record another AV information onto an information record medium by specifying it.

### ( I ) AV Information processing apparatus

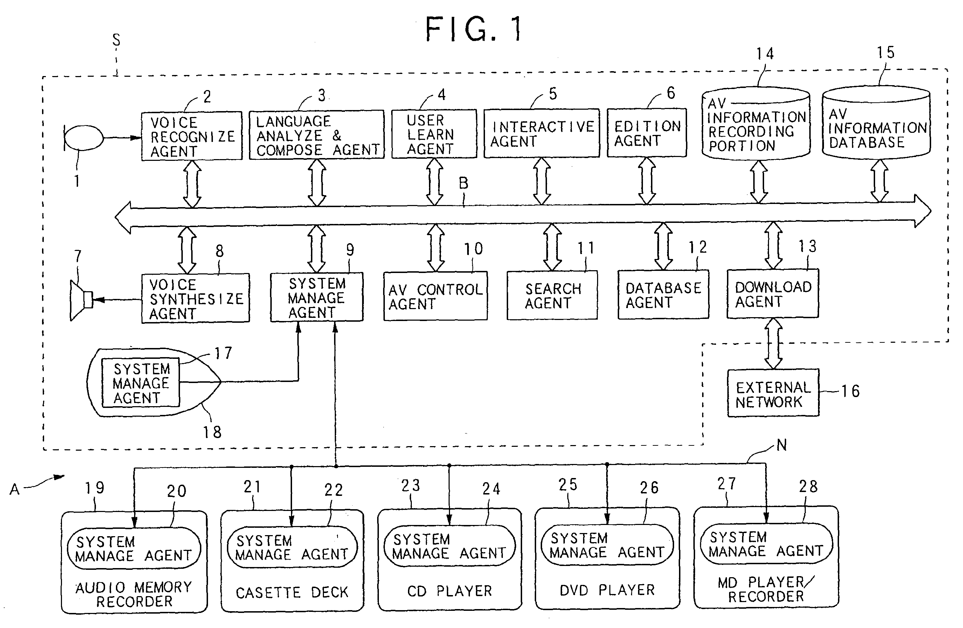

At first, a schematic configuration of the AV information processing apparatus as the embodiment of the present invention is described with reference to FIG.1. FIG.1 is a block diagram showing the schematic configuration of the AV information processing apparatus.

In FIG.1, an AV information processing apparatus A as the embodiment is installed within a single house. The AV information processing apparatus A is provided with: an AV information accumulating apparatus S; an audio memory recorder 19 which can record and/or reproduce AV information onto or from an audio memory, such as a semiconductor (solid) memory or a recordable optical disc (e.g., CD-R (CD-Recordable), DVD-R (DVD-recordable), DVD-RAM (DVD-Random Access Memory)) and the like; a cassette deck 21; a CD player 23; a DVD player 25; and an MD player/recorder 27. These audio memory recorder 19 etc., and the AV information accumulating apparatus S are connected to each other through a network N such as a home LAN (Local Area Network) so as to send and receive information to and from each other.

On the other hand, the AV information accumulating apparatus S is provided with: a voice recognize agent 2, to which a microphone 1 serving as one example of a requesting device and one example of a voice receiving device is connected; a language analyze & compose agent 3; a user learn agent 4; an interactive agent 5; an edit agent 6; a voice synthesize agent 8 to which a speaker 7 is connected; a system manage agent 9; an AV control agent 10 serving as one example of an executing device and also one example of a completing device; a search agent 11; a database agent 12; a download agent 13; a display 18 containing a system manage agent 17; an AV information recording portion 14 serving as one example of an AV information accumulating device which is actually constituted by a hard disc and its driver; and an AV information database 15 as one example of the AV information accumulating device and one example of a related information accumulating device. These respective agents, the AV information recording portion 14 and the information database 15 are connected through a communication bus B so as to send and receive information to and from each other.

Also, the download agent 13 is connected to an external network 16, for example, such as the Internet and the like, so as to send and receive information to and from it.

On the other hand, the audio memory recorder 19, the cassette deck 21, the CD player 23, the DVD player 25 and the MD player/recorder 27 include system manage agents 20, 22, 24, 26 and 28 respectively which are connected to the network N and control the operations of the respective devices.

At this time, the respective system manage agents 17, 20, 22, 24, 26 and 28 are respectively connected to the system manage agent 9 within the AV information accumulating apparatus S through the network N so as to send and receive information to and from the system manage agent 9.

Here, the "agent" is a module (i.e., a program module) having functions of self-controlling, cooperating and learning for each agent to judge what is to be processed and which output is to be outputted in accordance with a requested content and then perform the judged process and output the judged output, so that the process based on the requested content can be positively carried out under an independent judgment standard. At this time, each agent is realized by means of a CPU and the like as a computer for carrying out the process on the basis of a program corresponding to a function of each agent.

Each of the agents respectively carries out the independently given process. Thus, for example, if any one of the agents cannot be operated because of any reason, the other agents can continue to carry out the processes as they are, except the process related to this disabled agent.

By the way, the "agent" is described in detail, for example, in "Agent Orientation From Object Orientation", written by Shinichi Motoida and Akihiko Osuga, Soft Bank Corporation, in May 1998, and the like.

Next, the schematic operations of the respective sections will be described below.

At first, under a control of the system manage agent 20, the audio memory recorder 19 records AV information to be recorded, which is outputted through the network N from the AV information accumulating apparatus S, to a specified information record medium such as the above-mentioned semiconductor memory and the like, and also outputs the AV information recorded on the audio memory, through the network N to the AV information accumulating apparatus S.

On the other hand, under a control of the system manage agent 22, the cassette deck 21 records the AV information to be recorded, which is outputted through the network N from the AV information accumulating apparatus S, to a mounted cassette tape, and also outputs the AV information recorded in the cassette tape through the network N to the AV information accumulating apparatus S.

Under a control of the system manage agent 24, the CD player 23 outputs the AV information recorded on a mounted CD, through the network N to the AV information accumulating apparatus S.

Under a control of the system manage agent 26, the DVD player 25 outputs the AV information recorded on a mounted DVD through the network N to the AV information accumulating apparatus S.

Under a control of the system manage agent 28, the MD player/recorder 27 records the AV information to be recorded, which is outputted through the network N from the AV information accumulating apparatus S, onto a mounted MD, and also outputs the AV information recorded on the MD through the network N to the AV information accumulating apparatus S.

In linkage with these respective devices connected as mentioned above, the AV information accumulating apparatus S carries out processes of outputting one AV information through the speaker 7 into a house, in response to a request received through a voice from a user as detailed below, and also recording another AV information to either one of the information record media.

Next, the typical operations in the respective agents and the like included in the AV information accumulating apparatus S will be described below with reference to FIG.1.

At first, the AV information recording portion 14 accumulates therein a plurality of kinds of AV information under a condition that they can be mutually identified and read.

Next, the AV information database 15 records therein the attribute information indicative of the respective AV information recorded in the AV information recording portion 14 (e.g., identification information to identify a name of the recorded AV information, a category to which the recorded AV information belongs, a time necessary for reproducing the recorded AV information, and an information record medium to which the AV information is recorded, or relation information indicating such a fact that the recorded AV information has been used as a theme song of a movie or the like) under a condition that a plurality of the recorded AV information can be mutually identified.

On the other hand, the voice recognize agent 2 is the agent which has a function referred to as a "voice recognition engine" and carries out a process of a relatively low intelligence level. Actually, it recognizes the content of a voice signal corresponding to a voice of a user received from the microphone 1 (i.e., a voice indicative of a process to be carried out by using the AV information processing apparatus A or an answer corresponding to a voice outputted from the speaker 7 or the like), and outputs the content information indicative of the recognized content through the bus B to the language analyze & compose agent 3.

The language analyze & compose agent 3 is the agent for carrying out a process of a high intelligence level. Actually, it analyzes the obtained content information, and translates it into a middle language that can be recognized by the other agents except the voice recognize agent 2 and the voice synthesize agent 8, and then outputs the middle language to the bus B.

In addition, when obtaining the output information corresponding to the audio information or the response voice to be outputted through the speaker 7, from the bus B as the middle language, the language analyze & compose agent 3 converts it into the audio information or the voice signal that can be synthesized by the voice synthesize agent 8, and then outputs it to the voice synthesize agent 8.

The voice synthesize agent 8 is the agent which has a function referred to as a "voice synthesizing engine" and carries out a process of a relatively low intelligence level. Concretely, by using the converted voice signal or audio information, the voice synthesize agent 8 actually synthesizes the voice or audio information for outputting, and then outputs it through the speaker 7 to the user in the house.

The interactive agent 5 is the agent for carrying out a process of a high intelligence level. Concretely, through the bus B, the interactive agent 5 carries out a process of controlling a relation between the voice recognizing process and the voice synthesizing process (e.g., a process of controlling a relation between a timing of the execution of the voice recognizing process in the language analyze & compose agent 3 and a timing of the execution of the voice synthesizing process, or a process of specifying the content of the voice synthesis), a process of analyzing and performing the input content information and the like.

The user learn agent 4 is the agent which has a so-called "learning function" and carries out a process of a high intelligence level. Concretely, when obtaining the content information after the voice recognition through the bus B, the user learn agent 4 carries out the processes of dividing it for each user, storing it as a usage history (hereafter, suitably referred to as a "profile"), referring to a previous usage history for each user, and then analyzing and accumulating a habit and a taste of the user, and also carries out the process of storing a request from a user whose process is non-completed yet at that point.

The edit agent 6 is the agent for carrying out a process of an approximately middle intelligence level. Concretely, it carries out the process of obtaining information through the database agent 12 from the AV information database 15, in response to the request from the user, and editing a table (list) of reproducible AV information, and the like.

The search agent 11 is the agent for carrying out a process of an approximately middle intelligence level. Concretely, it carries out the process of searching the AV information database 15 through the database agent 12 in response to the request from the user, or searching the external network 16 through the download agent 13.

The database agent 12 is the agent for carrying out a process of a relatively low intelligence level. Concretely, it carries out the process of, irrespectively of the presence or absence of the request from the user, using the AV information obtained from the external network 16 through the download agent 13, and updates the contents of the AV information database 15 and the AV information recording portion 14, and also carries out the process of the arrangement and the management of the information within the AV information database 15 except the searching process, and the like

The download agent 13 is the agent for carrying out a process of an approximately middle intelligence level. Concretely, it carries out the process of newly obtaining the AV information from the external network 16, as the occasion demands, and mainly outputting it to the database agent 12.

The AV control agent 10 is the agent for carrying out a process of an approximately middle intelligence level. Concretely, while mainly sending and receiving the information to and from the system manage agent 9, the AV control agent 10 carries out a reproduction control such as a control of a reproduction order of AV information, a record control such as a selection of an information record medium for recording, and the like.

Finally, the system manage agent 9 is the agent for carrying out a process of a relatively low intelligence level. Concretely, while sending and receiving the information to and from each system manage agent connected to the network N and the system manage agent 17 within the display 18, the system manage agent 9 carries out an interface process and a state managing process of each device, such as the audio memory recorder 19 connected to the AV information accumulating apparatus S and the like.

In parallel to those processes, the system manage agent 9 jointly carries out a management of a signal received from the microphone 1 and a management of a signal outputted to the speaker 7.

### ( II ) AV Information Process

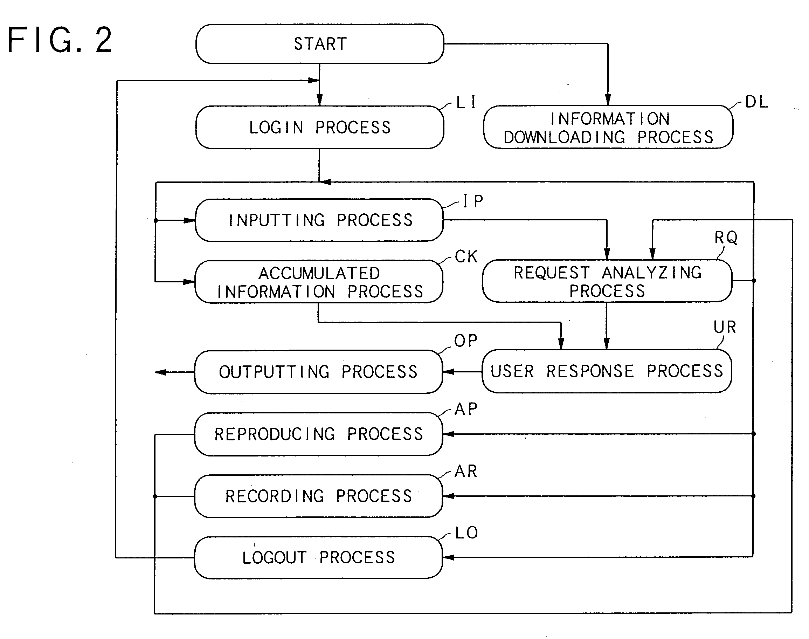

The AV information process according to the present invention to be carried out in the AV information processing apparatus A including the respective agents having the above-mentioned configurations will be described below with reference to FIG. 2 to FIG. 12.

At first, the whole configuration of the AV information process is described with reference to FIG. 2. FIG. 2 is a flowchart schematically showing the respective processes constituting the AV information process in a module manner and also showing a flow of the information and the relation between the respective processes.

As shown in FIG.2, when the AV information process according to the embodiment is carried out, a login process LI is firstly carried out.

This login process LI is mainly carried out by the system manage agent 9 and the user learn agent 4. Actually, when a user inputs a voice to the microphone 1, a process of identifying a name of the user, a process of reading out a usage history for each user associated with the identifying process and the like are carried out. Then, the result of the identifying process is outputted to an input process IP and an accumulated information process CK. Incidentally, even while just one user is using the AV information processing apparatus A, the login process LI is carried out for each voice input from the one user.

Next, the input process IP is mainly carried out by the system manage agent 9, the voice recognize agent 2 and the language analyze & compose agent 3. Actually, it recognizes the content of a process request inputted through the microphone 1 by using the user's voice (i.e., a process request including a content of the AV information process to be carried out by the AV information processing apparatus A), and outputs its result to a request analysis process RQ.

Then, the request analysis process RQ is the process serving as the core in the AV information process of the embodiment. It is mainly carried out by the user learn agent 4, the interactive agent 5, the search agent 11, the database agent 12, the system manage agent 9 and the AV control agent 10. Actually, it carries out the various processes corresponding to the process requests inputted by the user, and also instructs a reproducing process AP or a recording process AR to carry out recording the AV information or reproducing the AV information necessary for the execution of the process, respectively.

Also, the request analysis process RQ carries out the AV information process desired by the user in an interactive manner with the user by generating a closed loop between the request analysis process RQ and the input process IP.

Moreover, when it becomes necessary to output a voice to the user in the interaction with the user, the request analysis process RQ outputs the information indicative of a content to be outputted, to a user response process UR. At this time, if the AV information processing apparatus A does not have the information corresponding to a process request inputted by the user, the request analysis process RQ outputs the information indicative of a voice output of some information related to the process request to the user response process UR, or outputs the information indicative of the absence of the pertinent information to the user response process UR.

Furthermore, when it is judged from the interaction with the user that the user finishes inputting the process request to the AV information processing apparatus A, the request analysis process RQ outputs end information indicative of the end to a logout process LO.

On the other hand, the accumulated information process CK receiving the result of the identifying process outputted by the login process LI is mainly carried out by the user learn agent 4, the interactive agent 5, the search agent 11 and the database agent 12. Actually, the accumulated information process CK checks whether or not there is a process request that is non-completed in the process request on and after the login process LI was performed at the previous time. Further, if there is the process request that is non-completed yet and the AV information processing apparatus A already obtains the AV information under which the pertinent process request can be completed, the accumulated information process CK outputs the information indicating that the process request can be completed, to the user response process UR.

Accordingly, the user response process UR prepares a response sentence to be used in a response to the user corresponding to the information outputted by the accumulated information process CK or the information indicative of an execution of the voice output outputted by the request analysis process RQ, in coincidence with a feature of the user, and then outputs the response information to an output process OP. At this time, the user response process UR is mainly carried out by the user learn agent 4 and the interactive agent 5.

Next, the output process OP is mainly carried out by the voice synthesize agent 8, the language analyze & compose agent 3 and the system manage agent 9. Concretely, it carries out a process of converting the response information outputted by the user response process UR, into a voice for an actual output, and then outputting it through the speaker 7 to the user, and if there is information to be outputted as a picture, its content is displayed through the system manage agents 9 and 17 on the display 18.

The reproducing process AP is mainly carried out by the system manage agent of each device, which is connected through the network N to the AV information processing apparatus A and has a function of reproducing the AV information. Concretely, the reproducing process AP carries out the typical reproducing process of the AV information, in accordance with the instruction information from the request analysis process RQ, and also feeds back to the request analysis process RQ the reproduced AV information, the control information indicative of the end of the reproduction and the like.

On the other hand, the recording process AR is mainly carried out by the system manage agent of each device, which is connected through the network N to the AV information processing apparatus A and has a function of reproducing the AV information. Concretely, the recording process AR carries out the reproducing process of the AV information and the typical recording process of the reproduced AV information, in accordance with the instruction information from the request analysis process RQ, and also feeds back to the request analysis process RQ the control information indicative of the end of the recording and the like.

The logout process LO is mainly carried out by all the system manage agents and the user learn agent 4. Actually, it carries out a resetting process and an ending process of the AV information processing apparatus A itself, as well as the resetting processes and the ending processes of the respective connected devices, in accordance with the end information from the request analysis process RQ. Also, if there is the AV information process which has not been completed yet although it is desired to be completed in the AV information process in this time, the logout process LO carries out a process of storing its fact, and then ends the entire AV information process in the embodiment. Incidentally, if a power supply of the AV information processing apparatus A itself is not turned off after the end of the logout process LO, the operational flow waits for a next start of the login process LI.

Finally, an information download process DL is always carried out independently of the respective processes as mentioned above (whether or not the login process LI is carried out to thereby start the AV information process), and it is mainly carried out by the user learn agent 4 and the download agent 13. Concretely, the information download process DL carries out a process of obtaining AV information to complete the non-completed AV information process from the external network 16 and then recording it to the AV information recording portion 14 and also updating the AV information database 15.

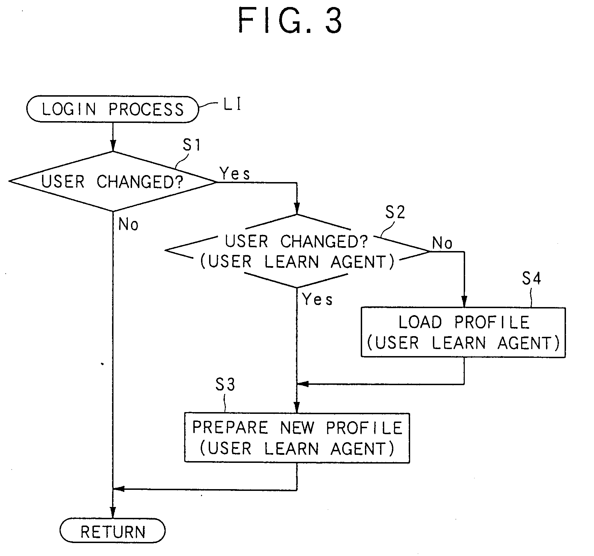

Next, the detailed portions of the respective processes described with reference to FIG.2 will be described below with reference to FIG.3 to FIG.12.

At first, the detailed portions of the login process LI is described with reference to FIG.3. FIG.3 is a flowchart showing the detailed portions of the login process LI.

In FIG. 3, in the login process LI, if it is recognized that a user starts the operation of the AV information processing apparatus A through the system manage agent 9 for managing a voice signal from the microphone 1, the user learn agent 4 judges whether or not the user is coincident with a user who has used the AV information processing apparatus A immediately before (Step S1).

If the user is coincident with the user immediately before i.e., if the user is not changed (Step S1 ; NO), it is judged that it is not necessary to obtain or update a user history in the user learn agent 4. So, the content of the input voice is outputted as it is to the system manage agent 9 for carrying out a part of the input process IP and the user learn agent 4 for carrying out a part of the accumulated information process CK.

On the one hand, in the judgment at the step S1, if the user is not coincide with the user immediately before i.e., if the user is changed (Step S1 ; YES), the user learn agent 4 judges whether or not a previous usage history of the recognized user (namely, the usage history of the recognized user among the usage histories of the AV information processing apparatus A accumulated for each user) is present in the user learn agent 4 (Step S2). If it is present (Step S2 ; YES), the corresponding usage history is read from the user learn agent 4 and is loaded to the request analysis process RQ (Step S3). Also, the content of the input voice is outputted to the system manage agent 9 for carrying out a part of the input process IP and the user learn agent 4 for carrying out a part of the accumulated information process CK.

In the judgment at the step S2, if the previous usage history of the recognized user is not present in the user learn agent 4 (Step S2 ; NO), a new usage history corresponding to the recognized user is prepared in the user learn agent 4 (Step S4). After that, the content of the input voice is outputted to the system manage agent 9 for carrying out a part of the input process IP and the user learn agent 4 for carrying out a part of the accumulated information process CK..

Incidentally, the above explained login process LI is started in accordance with an output of a voice from the user. Other than it, for example, it may be designed such that identification information in an identification card of each user is read in by a card reader (not shown) to thereby identify each user and then start the login process LI.

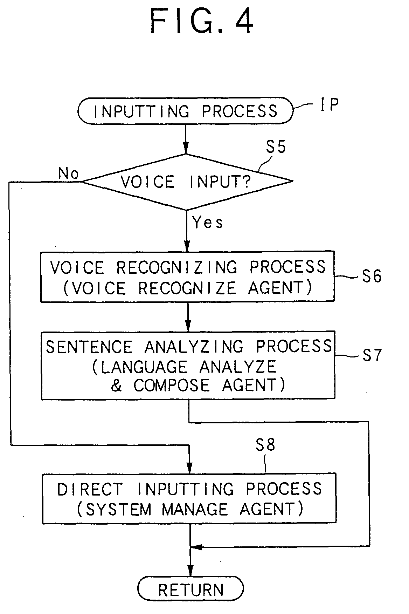

Next, the detailed portions of the input process IP will be described below with reference to FIG.4. FIG.4 is a flowchart showing the detailed portions of the input process IP.

In FIG. 4, in the input process IP, the system manage agent 9 firstly judges whether or not the information outputted by the login process LI is the voice information (Step S5). If it is the voice information (Step S2 ; YES, and it becomes usually "Yes" in the present embodiment), the voice information is recognized by the voice recognize agent 2 (Step S6). After that, the recognized voice information is translated into a middle language by the language analyze & compose agent 3 (Step S7). Then, the information indicative of the translated meaning and content (i.e., the meaning and content entered as a process request through a voice of the user) is outputted to the interactive agent 5 for carrying out a part of the request analysis process RQ.

On the one hand, in a case that the AV information processing apparatus A jointly has a function of recognizing, for example, a handwritten character and receiving a process request of the handwritten character or a function of receiving a process request using a remote control prepared in advance, if the information outputted by the login process LI is the character recognition result or the input result through the remote control in the judgment at the step S5 (Step S5 ; NO), the respective input contents are directly recognized by the system manage agent 9 and the like (Step S8). Then, the information indicative of the recognized input content is outputted to the interactive agent 5 for carrying out a part of the request analysis process RQ.

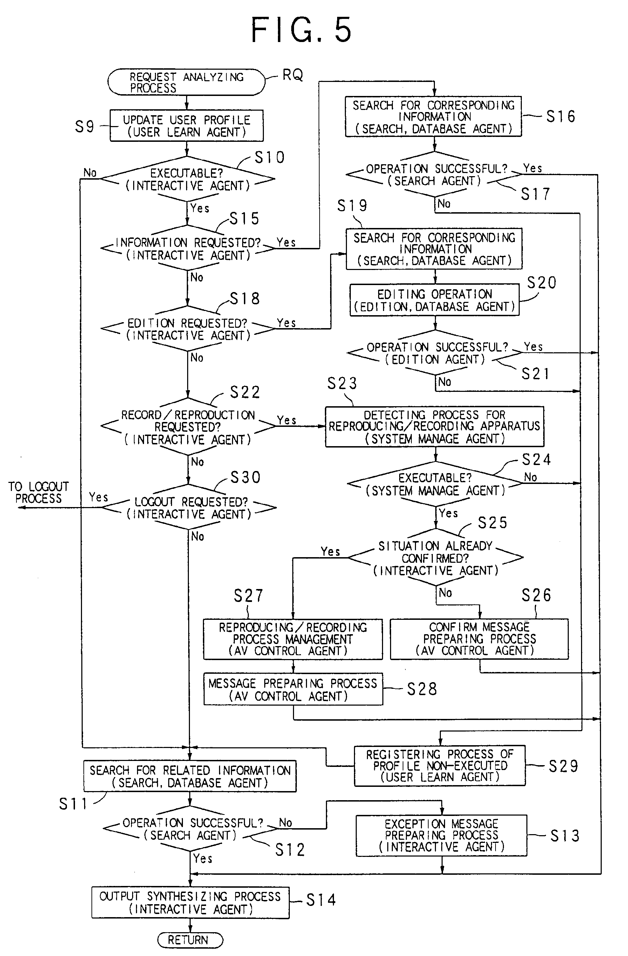

Next, the detailed portions of the request analysis process RQ will be described below with reference to FIG.5. FIG.5 is a flowchart showing the detailed portions of the request analysis process RQ.

In FIG. 5, at first, the request analysis process RQ again checks the usage history corresponding to each user stored in the user learn agent 4, in accordance with the voice recognition result inputted to the interactive agent 5, and then updates its content (e.g., a usage frequency of the AV information processing apparatus A) (Step S9). Then, the interactive agent 5 judges whether or not a process corresponding to the process request of the user included in the input voice recognition result can be executed in the AV information processing apparatus A (Step S10).

If the process corresponding to the process request cannot be executed in the AV information processing apparatus A (Step S10; NO), the search agent 11 and the database agent 12 are used to search the AV information database 15 and the external network 16 for the information related with the process request (e.g., if the process request is to reproduce a certain song of a certain singer, such a process is performed to search for another song of this singer, or search for a song of another singer in the genre same as this singer, or search for the newest song of this singer, or the like) (Step S11).

Then, the search agent 11 judges whether or not any search result can be obtained (Step S12). If the search result can be obtained (Step S12 ; YES), the interactive agent 5 performs a process of synthesizing a voice output corresponding to the obtained search result (Step S14). Its result is outputted to the user learn agent 4 for carrying out a part of the user response process UR.

On the one hand, in the judgment at the step S12, if any search result cannot be obtained (Step S12 ; NO), the interactive agent 5 generates an exception message (actually, a message of "Request cannot be accommodated" and the like) (Step S13), and performs the process of synthesizing the corresponding voice output (Step S14).

On the other hand, in the judgment at the step S10, if the process corresponding to the process request from the user can be executed in the AV information processing apparatus A (Step S10 ; YES), the interactive agent 5 judges whether or not the process request has the content requesting a presentation of the information desired by the user (e.g., a search display of a group of songs having a certain common feature, or a presentation of a song that is being reproduced currently and frequently, or the like) (Step S15).

Then, if the process request requests the presentation of the information (Step S15 ; YES), the interactive agent 5 instructs the search agent 11 to search for the information corresponding to the process request within the AV information database 15 and the external network 16. So, the search agent 11 and the database agent 12 search for the corresponding information (Step S16).

Then, the search agent 11 judges whether or not the corresponding information can be obtained (Step S17). If it can be obtained (Step S17 ; YES), the interactive agent 5 performs a process of synthesizing a voice output corresponding to the obtained information (Step S14). Its result is outputted to the user learn agent 4 for carrying out a part of the user response process UR.

On the one hand, in the judgment at the step S17, if the corresponding information cannot be obtained (Step S17 ; NO), this implies that the information representation request at the current time cannot be met. Thus, the interactive agent 5 outputs the information indicative of the non-treated process request (i.e., the process request for the non-completed process) to the user learn agent 4. Also, the user learn agent 4 registers its fact in the corresponding usage history (Step S29). Moreover, in order to search for the information related with the process request, the operational flow proceeds to the step S11. After that, the processes at the steps S11 to S14 are carried out.

On the other hand, in the judgment at the step S15, if the process request does not request the representation of the information (Step S15 ; NO), the interactive agent 5 judges whether or not the process request requests a representation of a list of a song desired by the user and the like (Step S18).

If the process request requests the presentation of the list (Step S18 ; YES), the interactive agent 5 outputs an edition condition in the list to be edited and the like, to the edit agent 6. Also, the interactive agent 5 instructs the search agent 11 to search for the information to be the list through the AV information database 15 and the external network 16. So, the search agent 11 and the database agent 12 search for the corresponding information (Step S19).

Then, the database agent 12 outputs the obtained information to the edit agent 6. Also, the edit agent 6 carries out an operation for editing the list (Step S20).

After that, the edit agent 6 judges whether or not the necessary list can be edited (Step S21). If it can be edited (Step S21 ; YES), the interactive agent 5 carries out a process of displaying the obtained list on the display 18 (Step S14). Its result is outputted to the user learn agent 4 for carrying out a part of the user response process UR.

On the one hand, in the judgment at the step S21, if the necessary list cannot be edited since the necessary information cannot be searched or because of other reasons (Step S21 ; NO), this implies that the list preparation request at the current time cannot be met. So, the operational flow proceeds to the step S29. Moreover, in order to search for the information related with the list edition request, the operational flow proceeds to the step S11. After that, the processes at the steps S11 to S14 are carried out.

On the other hand, in the judgment at the step S18, if the process request does not request the representation of the list (Step S18 ; NO), the interactive agent 5 judges whether or not the process request requests recording or reproducing the AV information such as a song desired by the user and the like (actually, for example, recording in MD a song recorded in the AV information recording portion 14) (Step S22).

If the process request requests recording or reproducing the AV information (Step S22 ; YES), the interactive agent 5 outputs to the system manage agent 9 the instruction of detecting the operation states of the respective devices connected to the AV information accumulating apparatus S. The system manage agent 9 checks the operation states (e.g., an on/off state of a power supply or an occurrence state of a trouble) of the respective devices connected through the network N, and outputs its result to the interactive agent 5 (Steps S23 and S24).

If the recording or reproducing process included in the process request cannot be carried out as the result of the check at the step S24 (Step S24 ; NO), the operational flow proceeds to the step S29. Moreover, in order to search for the information related with the recording or reproducing process request, the operational flow proceeds to the step S11. After that, the processes at the steps S11 to S14 are carried out.

On the other hand, if the recording or reproducing process included in the process request can be carried out in the check at the step S24 (Step S24 ; YES), its fact is indicated to the user. Next, the system manage agent 9 checks whether or not there is an input indicative of an admission of a process start from the user through the interactive agent 5 (Step S25).

If the process start is admitted (Step S25 ; YES), the system manage agent 9 reports the start of the correspondingly recording or reproducing process, to the AV control agent 10. Also, the AV control agent 10 receiving this report outputs the information with regard to an indication of an order of songs in the recording or reproducing process or an indication of the recording or reproducing manner, to the system manage agent 9. Then, the actual recording or reproducing process is carried out while the system manage agent 9 manages the system manage agent 20, 22, 24, 26 or 28 in each device (Step S27). At this time, when the process at the step S27 is carried out, the recording or reproducing process is carried out while the information is sent to or received from the reproducing device for carrying out the above-mentioned reproducing process AP (actually, the system manage agent of the device having the function of reproducing the AV information) or the recording device for carrying out the above-mentioned recording process AR (actually, the system manage agent of the device having the function of recording the AV information).

After that, after the completion of the necessarily recording or reproducing process, the AV control agent 10 carries out a message preparation process of indicating its completion to the user (Step S28). The preparation result is outputted to the interactive agent 5, and the processes on and after the step S14 are carried out.

On the one hand, in the judgment at the step S25, if the process start is not confirmed (Step S25 ; NO), the AV control agent 10 prepares a confirm message indicative of the confirmation for the process start to the user (Step S26). This is outputted through the interactive agent 5 to the user (Step S14).

On the other hand, in the judgment at the step S22, if the process request does not request the recording or reproducing of the AV information (Step S22 ; NO), there may be a possibility that the user requests the process request except the presentation of the information, or the preparation of the list, or the recording or reproducing of the AV information. For caution's sake, the interactive agent 5 checks whether or not the user requests the logout process LO in order to end the usage of the AV information processing apparatus A (Step S30). If the user requests the logout process LO (Step S30 YES), the end information is outputted to the logout process LO, as it is. If the user does not request (Step S30 ; NO), in order that the side of the AV information processing apparatus A positively checks the content of the process desired by the user, the operational flow proceeds to the step S11. Then, it searches for the information with regard to the process except the presentation of the information, or the preparation of the list, or the recording or reproducing of the AV information (Step S11). After that, the processes at the steps S12 to S14 are carried out.

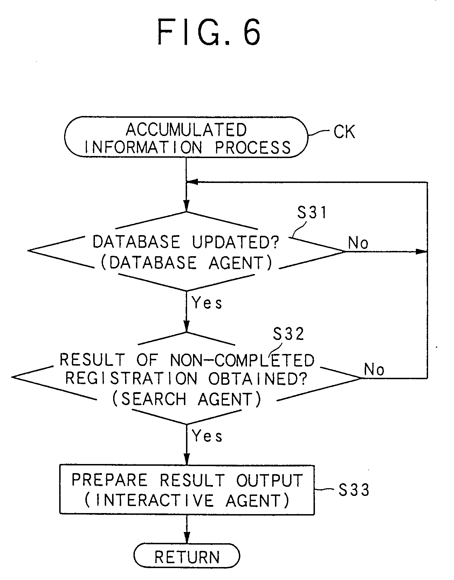

Next, the detailed portions of the accumulated information process CK will be described below with reference to FIG.6. FIG.6 is a flowchart showing the detailed portions of the accumulated information process CK.

In FIG. 6, in the accumulated information process CK, at first, in accordance with a voice recognition result inputted to the interactive agent 5, the user learn agent 4 checks whether or not the AV information database 15 is updated, through the database agent 12 (Step S31).

If the AV information database 15 is not updated (Step S31 ; NO), it is judged that there is no new information to be given to the user. Thus, the operational flow waits for the update. If the AV information database 15 is updated (Step S31 ; YES), the user learn agent 4 requests the search agent 11 to again search for the information corresponding to the non-completed process in the usage history stored in the user learn agent 4, and the search agent 11 receiving this request sends a search condition, a search parameter or the like, to the database agent 12 to thereby perform the actual search. After that, the presence or absence of the search result is checked (Step S32). If a new search result corresponding to the non-completed process is not obtained (Step S32 ; NO), the operational flow waits for the update of the AV information database 15. On the other hand, if the new search result is obtained (Step S32 ; YES), the search result is outputted from the user learn agent 4 to the interactive agent 5, so that a preparation to indicate it to the user is carried out (Step S33). Then, its preparation result is fed back to the user learn agent 4 for carrying out a part of the user response process UR.

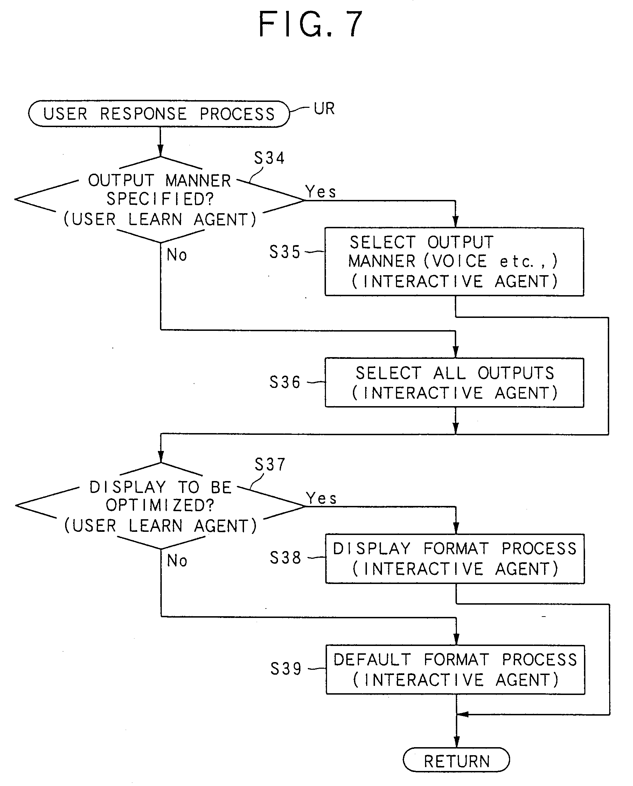

Next, the detailed portions of the user response process UR will be described below with reference to FIG.7. FIG.7 is a flowchart showing the detailed portions of the user response process UR.

In FIG. 7, in the user response process UR, when the response information prepared by the request analysis process RQ (refer to the step S14) or the search result prepared by the accumulated information process CK (refer to the step S33) is inputted, the interactive agent 5 firstly inquires of the user learn agent 4 whether or not a user currently using the AV information processing apparatus A performs any specification on the output manner of the process result (for example, a specification to carry out the output through a voice, or a specification to carry out the output through a picture display, or the like) (Step S34). If any output manner is specified (Step S34 ; YES), the corresponding output manner is selected in the interactive agent 5 (Step S35). Then, the operational flow proceeds to a step S37.

On the other hand, if the output manner is not specified in the check at the step S34 (Step S34 ; NO), either one of pre-set output manners is selected (Step S36). If the output manner is a picture display, the interactive agent 5 inquires of the user learn agent 4 whether or not the user specifies a display manner (actually, a specification of a screen layout for an output and the like) (Step S37). If the display manner is specified (Step S37 ; YES), a format is generated so as to indicate the process result in accordance with the specified display manner (Step S38). The format result is outputted to the system manage agent 9 (in a case of the picture display output) or the language analyze & compose agent 3 (in a case of the voice output) for carrying out a part of the output process OP, as the response information.

On the other hand, if the display manner is not specified in the check at the step S37 (Step S37 ; NO), a format is generated so as to indicate the process result in accordance with either one of pre-set display manners (Step S39). The format result is outputted to the system manage agent 9 or the language analyze & compose agent 3 for carrying out a part of the output process OP, as the response information.

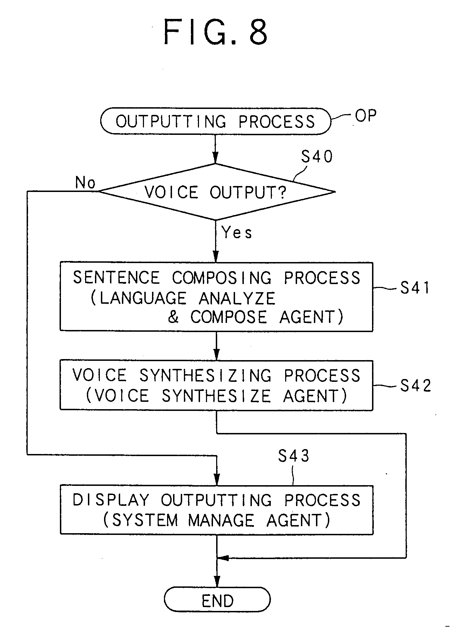

Next, the detailed portions of the output process OP will be described below with reference to FIG.8. FIG.8 is a flowchart showing the detailed portions of the output process OP.

In FIG. 8, in the output process OP, it is firstly judged whether or not the output manner specified in the user response process UR is the usage of the voice (Step S40).

If it is judged as the usage of the voice (Step S40 ; YES), the language analyze & compose agent 3 converts the content of the process result constituted by the middle language into a response sentence corresponding to the situation, and outputs the converted result to the voice synthesize agent 8 (Step S41).

Then, the voice synthesize agent 8 receiving this converted result synthesizes the corresponding voice, and outputs it through the speaker 7 to the user (Step S42).

On the other hand, in the judgment at the step S40, if the output manner specified in the user response process UR is judged as the usage of the picture display (Step S40 ; NO), the corresponding picture is synthesized by the system manage agents 9 and 17 and is outputted to the user (Step S43).

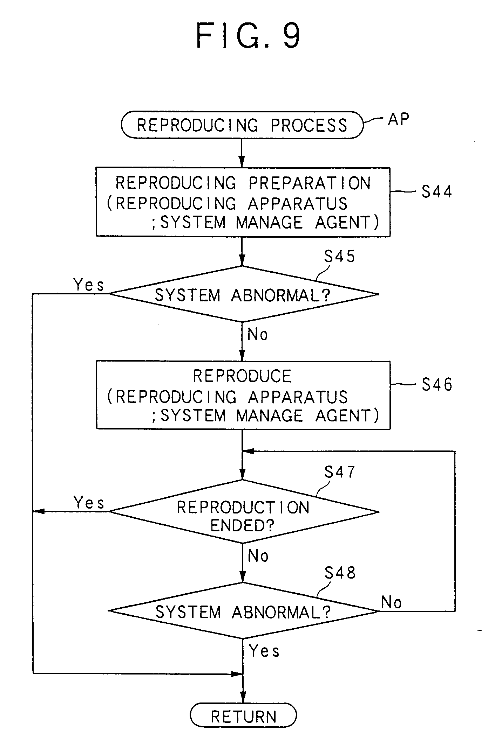

Next, the detailed portions of the reproducing process AP will be described below with reference to FIG.9. FIG.9 is a flowchart showing the detailed portions of the reproducing process AP.

In FIG. 9, in the reproducing process AP, the system manage agent 9 firstly outputs the request indicative of the reproduction preparation through the network N to the system manage agent of the device having the reproducing function targeted for the AV information reproduction (Step S44). Then, the system manage agent 9 checks whether or not the device targeted for the reproduction is abnormal with regard to the reproducing function (Step S45).

If the targeted device is abnormal (Step S45 ; YES), the desired reproducing function cannot be executed as it is. Thus, its fact is outputted to the system manage agent 9 for carrying out the request analysis process RQ (refer to the step S23).

On the other hand, if it is not abnormal (Step S45 ; NO), the system manage agent of the device targeted for the reproduction performs the actually reproducing process (Step S46).

After that, it is checked whether or not the control information indicative of a reproduction end is outputted from the system manage agent on the device side targeted for the reproduction to the system manage agent 9 (Step S47). If it is outputted (Step S47; YES), the system manage agent 9 outputs its fact to the AV control agent 10 carrying out the process at the step S27.

On the other hand, if the reproduction is not ended in the judgment at the step S47 (Step S47 ; NO), it is always monitored whether or not the device targeted for the reproduction is abnormal (Step S48). If the targeted device is not abnormal (Step S48 ; NO), the operational flow returns back to the step S47. In succession, it continues the reproducing process. If the targeted device is abnormal and the continuation of the reproducing process cannot be continued (Step S48 ; YES), the system manage agent 9 outputs its fact to the AV control agent 10 carrying out the process at the step S27.

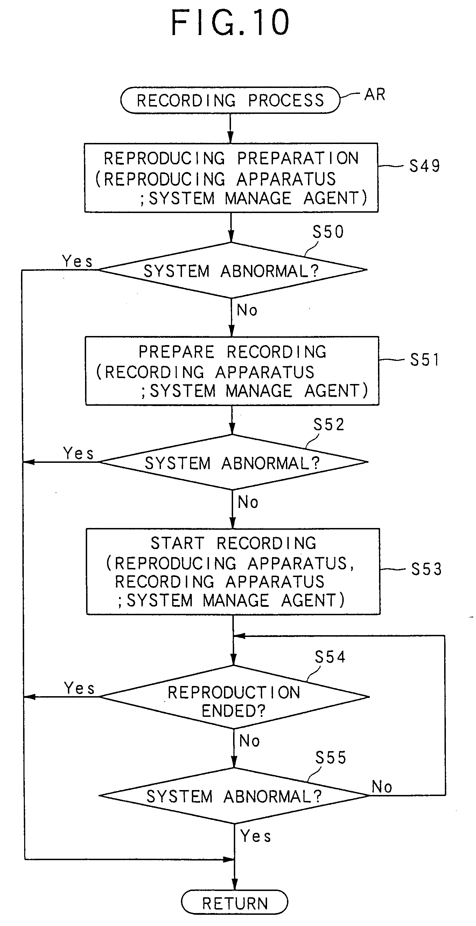

Next, the detailed portions of the recording process AR will be described below with reference to FIG.10. FIG.10 is a flowchart showing the detailed portions of the recording process AR.

In FIG. 10, in the recording process AR, the system manage agent 9 firstly outputs a request indicative of a reproducing preparation through the network N to a system manage agent of a device having the reproducing function targeted for the reproducing process associated with the recording of AV information (Step S49). Then, the system manage agent 9 checks whether or not the device targeted for the reproduction is abnormal with regard to the reproducing function (Step S50).

If the targeted device is abnormal (Step S50 ; YES), it cannot perform the desirably reproducing and recording functions as it is. Thus, its fact is outputted to the system manage agent 9 for carrying out the request analysis process RQ (refer to the step S23).

On the other hand, if the targeted device is not abnormal (Step S50 ; NO), the system manage agent 9 then outputs a request indicative of a recording preparation through the network N to a system manage agent of a device having the recording function targeted for the recording of the AV information (Step S51). Then, the system manage agent 9 checks whether or not the device targeted for the recording is abnormal with regard to the recording function (Step S52).

If the targeted device is abnormal (Step S52 ; YES), it cannot perform the desirably recording function as it is. Thus, its fact is outputted to the system manage agent 9 for carrying out the request analysis process RQ (refer to the step S23).

On the other hand, if the targeted device is not abnormal (Step S52 ; NO), the system manage agent of the device targeted for the reproduction then performs the actual reproducing process. Also, the system manage agent of the device targeted for the recording performs the process of recording the reproduced AV information (Step S53).

After that, it is checked whether or not the system manage agent on the device side targeted for the reproduction outputs the information indicative of an end of the reproduction to the system manage agent 9 (Step S54). If this information is outputted (Step S54 ; YES), the system manage agent 9 outputs its fact to the AV control agent 10 for carrying out the process at the step S27.

On the other hand, if the reproduction is not still ended in the judgment at the step S54 (Step S54 ; NO), it is always monitored whether or not any trouble is induced in the device targeted for the reproduction and the record (Step S55). If any trouble is not induced i.e., if it is not abnormal (Step S55 ; NO), the operational flow returns back to the step S54. The reproducing and recording processes are continued in succession. If any trouble occurrence disables the reproducing and recording processes to be continued i.e., if it is abnormal (Step S55 ; YES), the system manage agent 9 outputs its fact to the AV control agent 10 for carrying out the process at the step S27.

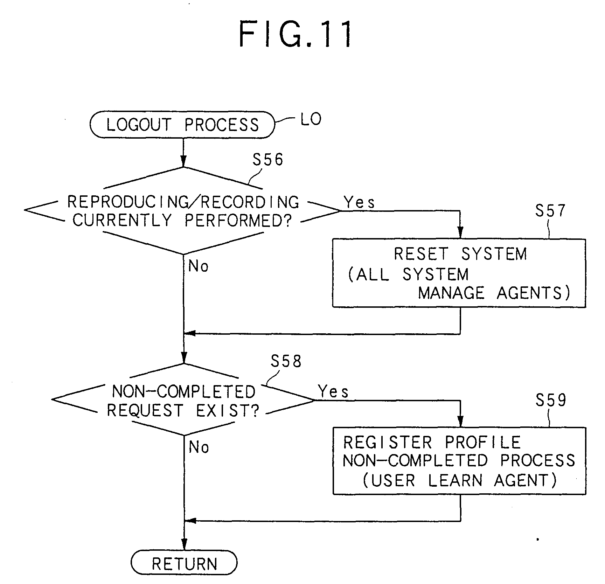

Next, the detailed portions of the logout process LO will be described below with reference to FIG.11. FIG.11 is a flowchart showing the detailed portions of the logout process LO.

In FIG. 11. in the logout process LO, if a logout request is outputted at the step S30 in the request analysis process RQ so that the end information is outputted (Step S30 ; YES), the interactive agent 5 firstly inquires of the AV control agent 10 whether or not the recording or reproducing the AV information is being currently performed (Step S56). If it is being currently performed (Step S56 ; YES), all the system manage agents carry out an initializing process to carry out the logout, in accordance with the request from the interactive agent 5 i.e., the system reset is performed (Step S57). Then, the operational flow proceeds to a step S58.

On the other hand, if the AV information is not being recorded or reproduced in the judgment at the step S56 (Step S56 ; NO), it is then checked whether or not there is a non-completed process request in the interactive agent 5 (Step S58). If there is the non-completed process request since the user gets up from a seat during the process or because of other reasons (Step S58 ; YES), the fact that the non-completed process request remains is registered in a usage history corresponding to a current user among the usage histories stored in the user learn agent 4 (Step S59). Then, in order to wait for a next login, the operational flow proceeds to a waiting state.

On the other hand, if there is not the non-completed process request in the judgment at the step S58 (Step S58 ; NO), it is allowable to end the process as it is. Thus, in order to wait for a next login, the operational flow proceeds to the waiting state as it is.

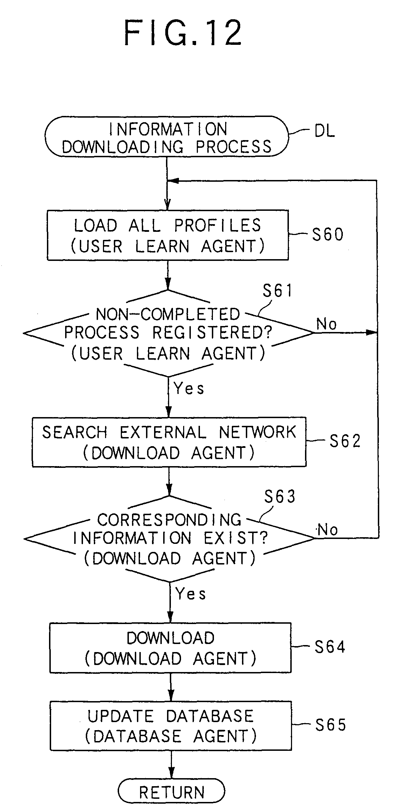

Finally, the detailed portions of the information download process DL will be described below with reference to FIG.12. FIG.12 is a flowchart showing the detailed portions of the information download process DL.

The information download process DL is the process which is always carried out for each predetermined temporal interval, irrespectively of the presence or absence of the login from the user to the AV information processing apparatus A.

That is, in FIG. 12, in the information download process DL, at first, the usage histories stored in the user learn agent 4 are all read out (Step S60). Then, the user learn agent 4 checks whether or not there exists a non-completed process request in the usage histories (Step S61).

If there is not the non-completed process request (Step S61 ; NO), in order to repeat the information download process DL in the predetermined temporal interval, the operational flow returns back to the step S60. On the other hand, if there is the non-completed process request (Step S61 ; YES), the user learn agent 4 then requests the download agent 13 to obtain the information necessary for the completion of the non-completed process request. Correspondingly to this request, the download agent 13 searches through the external network 16 (Step S62).

After that, the download agent 13 checks whether or not there is the corresponding information as the result of the search (Step S63). If there is not the corresponding information (Step S63 ; NO), in order to repeat the similar process in the information download process DL at a next time, the operational flow returns back to the step S60. On the other hand, if the corresponding information can be searched (Step S63 ; YES), the download agent 13 obtains the information (Step S64). Moreover, the contents of the AV information recording portion 14 and the AV information database 15 are updated in accordance with the information obtained through the database agent 12 (Step S65). Then, one information download process DL is ended.

### EXAMPLE

One example of the actual operations of the AV information processing apparatus A according to the present invention will be exemplified and described below by collecting the above-mentioned respective processes.

In the above-mentioned case of the AV information process in the AV information processing apparatus A, for example, if a user says to the microphone 1, "Is the newest album of a singer "A" accumulated ? Although I want to listen to a song of a singer "B" that I have ever heard in a theme song, I do not known its title. Is there any information ?", a reply of "To my disappointment, the newest version of the signer A cannot be still downloaded. The newest version "***" of the singer "B" is already prepared. Also, as theme songs of movies in the songs of the singer B, there are "1;+++", "2;///" and "3;$$$". Please, tell a desirable number." may be replied as the reply from the AV information processing apparatus A. By the way, the replay can be mainly attained by the processes at the steps S11 to S17 in the above-mentioned processes.

Moreover, for the reply, if the user says to the microphone 1, "What kind of song is there in a song of a ballade category of R&B ?", for example, an answer of ""*+/" of a singer "C" in the ballade category is recommended as a new song. By the way, it has been known that the newest version of the above-mentioned signer "A" is arrived three days after. Please, enjoy it three days after." may be answered as the answer from the AV information processing apparatus A. Incidentally, the answer can be mainly attained by the information download process DL and the processes at the steps S15 to S17 in the above-mentioned processes.

As described above, according to the operation of the AV information processing apparatus A in the embodiment, since the information process is executed if the information process is requested which can be executed by using the accumulated AV information. On the other hand, even if the information process is requested which cannot be executed by using the accumulated AV information, the corresponding related information is searched and outputted. Thus, it is possible for the user to obtain some kind of process result when the user requests the information process to the AV information processing apparatus A. Thus, it is possible for the user who is not accustomed to the treatment of the AV information processing apparatus A to easily treat the AV information processing apparatus A without dissatisfaction. In this way, it is possible for the AV information processing apparatus A to execute the necessary information process in the user friendly manner.

Also, since the plurality of related information whose response manners are different from each other are provided, it is possible for the AV information processing apparatus A to execute the information process in the even more friendly manner.

Moreover, the related information is outputted to the external portion by using at least one of the voice and the picture. Thus, the related information can be outputted in the form that the use can easily recognize it.

In case that the information process which cannot be executable by the AV information processing apparatus A is requested, such an exception message is outputted that "We cannot response for your request" or the like. Thus, the user can always obtain some response when the user requests the information process to the AV information processing apparatus A. In this way, it is possible for the AV information processing apparatus A to execute the information process in the even more friendly manner.

Also, the request of the information process from the external portion through the voice by using the microphone 1 can be received so that the user can easily request the information process.

Incidentally, in the above described embodiment, the method of using the voice has been mainly described as the method for sending and receiving the information between the user and the AV information processing apparatus A. However, other than it, for example, the present invention can be applied to a case that information is sent and received by using a character recognition and a picture display or that an information is sent and received by using a remote controller and the like, a picture display and a voice output.

Also, the program to carry out the processes in the respective agents is stored in a flexible disc serving as an information record medium. Then, this is read out and carried out by a typical personal computer (it is necessary that it has a hard disc serving as the AV information recording portion 14 and the AV information database 15). Accordingly, the personal computer can function as the AV information processing apparatus A. Alternatively, such a computer program may be downloaded to the AV processing apparatus A through the external network 16.

## Claims

1. An AV (Audio Visual) information processing apparatus (A) characterized in that said apparatus comprises:
an AV information accumulating device (14) for accumulating AV information including at least one of audio information, video information and data information corresponding to at least one of the audio information and the video information;
a requesting device (7) for requesting an execution of an information process, which uses the accumulated AV information, from an external portion;
an executing device (10) for executing the requested information process by using the accumulated AV information;
a related information accumulating device (15) for accumulating related information, which is related to the accumulated AV information; and
an outputting device (5) for searching the related information accumulating device for the related information corresponding to a non-executable process, which is not executable by said executing device, and outputting the searched related information to an external portion when the non-executable process is requested by said requesting device.

2. An AV information processing apparatus (A) according to Claim 1, characterized in that said outputting device (5) searches the related information accumulating device (15) for a plurality of the related information, whose response manners to the non-executable process are different from each other, and outputs the searched plurality of the related information to the external portion.

3. An AV information processing apparatus (A) according to Claim 1 or 2, characterized in that said outputting device (5) outputs the searched related information corresponding to the non-executable process to the external portion by using at least one of a voice and a picture.

4. An AV information processing apparatus (A) according to any one of Claims 1 to 3, characterized in that said apparatus further comprises a sub-outputting device (5) for outputting information indicating a fact that no process can be executed by said AV information processing apparatus if an impossible process, which is impossible to execute even by using the related information, is requested by said requesting device (7).

5. An AV information processing apparatus (A) according to any one of Claims 1 to 4, characterized in that said requesting device (7) comprises a voice receiving device (7) for receiving a request of the information process from the external portion through a voice.

6. A computer program of instructions executable by a computer to perform steps to execute information process requested by a user, in an AV information processing apparatus (A) comprising: an AV information accumulating device (14) for accumulating AV information including at least one of audio information, video information and data information corresponding to at least one of the audio information and the video information; and a related information accumulating device (15) for accumulating related information, which is related to the accumulated AV information, characterized in that said steps comprise:
a requesting step of requesting an execution of an information process, which uses the accumulated AV information, from an external portion;
an executing step of executing the requested information process by using the accumulated AV information; and
an outputting step of searching the related information accumulating device for the related information corresponding to a non-executable process, which is not executable by said executing step, and outputting the searched related information to an external portion when the non-executable process is requested by said requesting step.

7. A computer program according to Claim 6, characterized in that said outputting step searches the related information accumulating device (15) for a plurality of the related information, whose response manners to the non-executable process are different from each other, and outputs the searched plurality of the related information to the external portion.

8. A computer program according to Claim 6 or 7, characterized in that said outputting step outputs the searched related information corresponding to the non-executable process to the external portion by using at least one of a voice and a picture.

9. A computer program according to any one of Claims 6 to 8, characterized in that said steps further comprise a sub-outputting step of outputting information indicating a fact that no process can be executed by said AV information processing apparatus (A) if an impossible process, which is impossible to execute even by using the related information, is requested by said requesting step.

10. A computer program according to any one of Claims 6 to 9, characterized in that said requesting step comprises a voice receiving step of receiving a request of the information process from the external portion through a voice.
